# EUROPÄISCHE PATENTSCHRIFT

(11) **EP 1 373 779 B1**
(45) Veröffentlichungstag und Bekanntmachung des Hinweises auf die Patenterteilung: **27.07.2005**
(21) Anmeldenummer: 02724249.4
(22) Anmeldetag: 20.03.2002
(51) Int. Cl.: F16L 37/084

(54) **LÖSBARE STECKKUPPLUNG MIT ZUSÄTZLICHEM VERRIEGELUNGSELEMENT**
DETACHABLE PLUG COUPLING PROVIDED WITH AN ADDITIONAL LOCKING ELEMENT
ACCOUPLEMENT PAR EMBOITEMENT AMOVIBLE A ELEMENT DE VERROUILLAGE ADDITIONNEL

(30) Priorität: 29.03.2001 DE 10115399
(43) Veröffentlichungstag der Anmeldung: 02.01.2004
(73) Patentinhaber: A. Raymond & Cie, 38028 Grenoble (FR)
(72) Erfinder: MORETTI, Erminio, F-38000 Grenoble (FR); MARTIN-COCHER, Daniel, F-38950 Saint Martin le Vinoux (FR)
(74) Vertreter: Rüttgers, Joachim, Dr.
(86) Internationale Anmeldenummer: PCT/EP2002/003076
(87) Internationale Veröffentlichungsnummer: WO 2002/079684

(56) Entgegenhaltungen:
- DE-C- 19 822 574
- US-A- 4 869 534
- US-A- 6 082 779

## Beschreibung

Die Erfindung betrifft eine lösbare Steckkupplung mit zusätzlichem Verriegelungselement zum Verbinden von Flüssigkeitsleitungen. Derartige Steckkupplungen werden beispielsweise im Kraftfahrzeugbau verwendet, um Kraftstoffleitungen untereinander oder mit einem Kraftstoffbehälter- oder verteiler zu verbinden.

Die Steckkupplung besteht hierbei aus einem mit dem Ende der einen Kraftstoffleitung verbindbaren, rohrförmigen Einsteckteil mit einer umlaufenden Halterippe und aus einem mit dem Ende der anderen Kraftstoffleitung verbindbaren Kupplungsgehäuse, das mit einem zylindrischen Aufnahmeraum und einem vergrößerten Gehäusekopf mit einem separaten Halteelement ausgebildet ist. Letzteres ist mit radial in den Aufnahmeraum gerichteten, elastisch auffederbaren Haltekanten versehen, welche die Halterippe nach dem Eindrücken des Einsteckteils in den Aufnahmeraum hintergreifen. Die Steckkupplung besitzt ferner ein mit dem Kopf des Kupplungsgehäuses verbindbares Verriegelungselement, welches nach dem korrekten Einrasten des Einsteckteils im Halteelement quer zur Einsteckrichtung vor die Halterippe bewegbar ist.

Eine derartige Steckkupplung mit einem zusätzlichem Verriegelungselement ist beispielsweise bekannt aus WO 96/34224. Das Verriegelungselement ist hierbei als Klinke ausgebildet, die über ein an der Außenfläche des Kupplungsgehäuses angeformtes Scharnier schwenkbar gelagert ist. An der Klinke ist eine Verriegelungszunge angeformt, die beim Einschwenken der Klinke nach dem Einrasten des Einsteckteils zwischen einer radial in das Gehäuse hineinreichenden Schlitzfalle und der Halterippe angeordnet ist, um ein Herausziehen des Einsteckteils aus dem Aufnahmeraum des Kupplungsgehäuses zusätzlich zu verhindern.

Dieses Verriegelungselement ist in seiner konstruktiven Ausbildung insofern unbefriedigend, als es zu seiner Lagerung und zum Erreichen des angestrebten Verriegelungseffekts am Kupplungsgehäuse verschiedener baulicher Änderungen und Anpassungen bedarf. Auch erfordert die Herstellung der Scharnierverbindung einen zusätzlichen Arbeitsgang, der ebenfalls die Herstellungskosten der gesamten Steckkupplung verteuert. Schließlich wird es als Nachteil empfunden, daß die Klinke vor dem Einschwenken schräg nach oben absteht und daher in der Öffnungsstellung sehr sperrig ist.

Eine Steckkupplung mit einem zusätzlichen Verriegelungselement ist ferner bekannt aus US 4 869 534 - A. Das Verriegelungselement besteht hierbei aus zwei am Gehäusekopf beidseitig anliegenden Seitenwänden, welche durch eine Stirnplatte U-förmig gehalten sind. Das Verriegelungselement besitzt an der Unterseite eine Querwand und ist auf der anderen, der Stirnplatte gegenüberliegenden Seite mit nach innen weisenden, an einer Kopfkante verrastbaren Kanten versehen ist, so daß das Verriegelungselement zwischen zwei Endstellungen querverschieblich geführt ist. Die Stirnplatte weist in der Öffnungsstellung eine halbrunde Aussparung entsprechend dem Außendurchmesser der Halterippe auf und ist vom Grund der Aussparung aus in Richtung auf die Querwand mit einer kleineren,, halbrunden Aussparung ausgeformt, welche dem Rohrdurchmesser des Einsteckteils entspricht.

Durch diese Ausbildung der Stirnplatte wird zwar in der Schließstellung die Öffnung bis zur Außenwand des Einsteckteils abgedeckt, doch bleibt das Halteelement nicht gegen ein unbeabsichtigtes Lösen geschützt, weil das Einsteckteil nach einem versehentlichen Berühren und Verschieben des Halteelements soweit zurück gleiten kann, bis die Halterippe von innen gegen die Stirnplatte anstößt. Dann besteht jedoch die Gefahr, daß die Dichtigkeit der Steckkupplung nicht mehr gewährleistet ist.

Ausgehend von diesem Stand der Technik ist es Aufgabe der Erfindung, das vorgenannte Verriegelungselement so zu gestalten, daß ein unbeabsichtigtes Lösen des Halteelements verhindert wird oder aber dafür gesorgt ist, daß auch bei versehentlichem Lösen des Halteelements das Einsteckteil in seiner Schließposition sicher gehalten wird. Dieses zusätzliche Verriegelungselement soll ferner so ausgebildet sein, daß die Ausrüstung der Steckkupplung mit dem Verriegelungselement ohne Änderungen am Kupplungsgehäuse möglich ist und das Verriegelungselement auch bei bestehenden Kupplungsgehäusen ohne großen Aufwand nachrüstbar ist, auch wenn diese bereits im Einsatz sind..

Diese Aufgabe wird im wesentlichen durch die im Anspruch 1 angegebene Ausbildung des Verriegelungselements gelöst, welches sich problemlos auf den Kopf des Kupplungsgehäuses in axialer Richtung aufdrücken und nach der Herstellung der Kupplungsverbindung mit dem Einsteckteil leicht in die Verriegelungspostion verschieben läßt. Hierbei wird durch an der Innenseite der Stimwand gemäß Anspruch 2 angeformte Positionierungsnocken sichergestellt, daß das Verriegelungselement sowohl in seiner Öffnungsstellung als auch in seiner Verriegelungsstellung sicher gehalten ist.

In der Zeichnung ist ein Ausführungsbeispiel der Erfindung dargestellt und soll nachfolgend näher erläutert werden. Es zeigt
- Fig. 1: Das Kupplungsgehäuse im Längsschnitt ohne Verriegelungselement,
- Fig. 2: einen Querschnitt durch den Kopf des Kupplungsgehäuses gemäß Linie II - II in Fig. 1
- Fig. 3: ein Verriegelungselement in Draufsicht

- Fig. 4: das Kupplungsgehäuse im Längsschnitt wie Fig. 1 mit auf den Gehäusekopf aufgedrücktem Verriegelungselement,
- Fig. 5: einen um 90° gedrehten Teilschnitt durch den Gehäusekopf gemäß Linie V - V in Fig. 4 mit Verriegelungselement in Öffnungsposition,
- Fig. 6: Den Gehäusekopf mit Verriegelungselement in Frontansicht,
- Fig. 7: einen Längsschnitt durch das Kupplungsgehäuse wie Fig. 4 während des Einführens eines Einsteckteils,
- Fig. 8: einen um 90° gedrehten Teilschnitt durch den Gehäusekopf wie Fig. 5 während des weiteren Einführens des Einsteckteils mit Verriegelungselement in Öffnungsposition
- Fig. 9: die Frontansicht hierzu,
- Fig.10: einen Teilschnitt wie Fig. 8 mit vollständig eingerastetem Einsteckteil und querverschobenem Verriegelungselement in Schließposition und
- Fig. 11: die Frontansicht hierzu

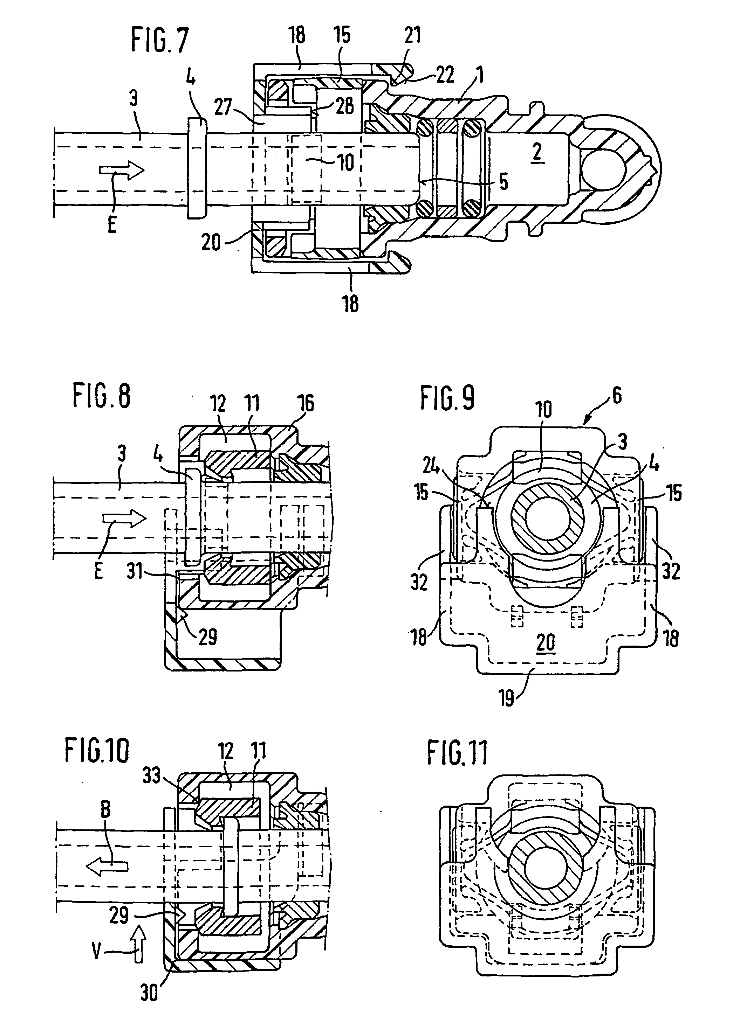

Die in den Figuren dargestellte Steckkupplung besteht im wesentlichen aus einem Kupplungsgehäuse **1** mit einem zylindrischen Aufnahmeraum **2** zum Einführen eines rohrförmigen Einsteckteils **3,** das im Abstand vom Mündungsende **5** mit einer umlaufenden Halterippe **4** versehen ist (vgl. **Fig. 7).** Das Kupplungsgehäuse **1** ist im Eingangsbereich mit einem vergrößerten Gehäusekopf **6** ausgebildet, welcher ein separates Halteelement **7** aufnimmt. Am Ende des Aufnahmeraums **2** schließt sich an das Kupplungsgehäuse **1** ein sogenannter Anschlußstutzen **8** mit einer Auslassöffnung **9** an, durch welche die über die Kupplung zugeführte Flüssigkeit in eine nicht dargestellte Flüssigkeitsleitung weiterfließen kann.

Das Halteelement **7** ist mit radial in den Aufnahmeraum **2** gerichteten, elastisch auffederbaren Haltekanten **10** versehen, welche beim Eindrücken des Einsteckteils **3** in den Aufnahmeraum **2** in Richtung des Pfeiles "**E"** von der Halterippe **4** auseinandergedrückt werden und nach dem Passieren der Haltekanten **10** wieder in ihre Ausgangslage zurückfedern und dabei die Halterippe **4** in bekannter Weise hintergreifen und so das Einsteckteil **3** im Kupplungsgehäuse **1** fest verkuppeln.

Die Haltekanten **10** sind zu diesem Zweck an zwei nach außen abstehende Stützkörper **11** angeformt, welche ihrerseits im eingebauten Zustand des Halteelements **7** in entsprechende Aussparungen **12** der Gehäusewand **16** eintauchen und dort entgegen der Einsteckrichtung gehalten werden. Die Stützkörper **11** sind an ihren Enden über V-förmig zusammengeführte Federstege **14** untereinander verbunden, wobei die Verbindungsstellen jeweils mit einer etwa rechteckigen Druckplatte **15** abgedeckt sind, welche durch entsprechende Öffnungen **13** in der Gehäusewand **16** nach außen ragen.

Zum Lösen der Kupplung werden die Druckplatten **15** von außen zusammengedrückt. Dabei werden die Haltekanten **10** über die Federstege **14** und die Stützkörper **11** auseinanderbewegt, so daß die Halterippe 4 freigelegt ist und das Einsteckteil **3** aus dem Kupplungsgehäuse **1** herausgezogen werden kann.

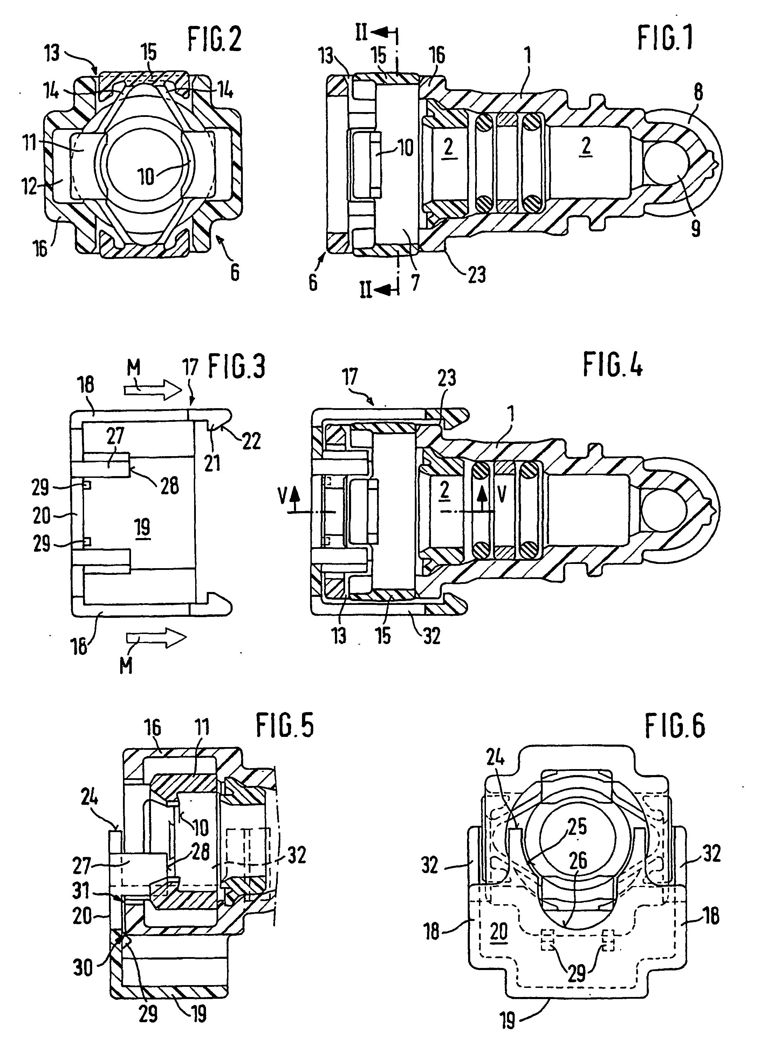

Um nach dem Einführen des Einsteckteils **3** sicher zu gehen, daß die Halterippe **4** korrekt hinter den Haltekanten **10** eingerastet ist, ist ein zusätzliches Verriegelungselement **17** vorgesehen, welches am im Querschnitt rechteckig ausgebildeten Gehäusekopf **6** querverschiebbar befestigt ist. Dieses Verriegelungselement **17** besteht, wie aus den **Fig. 3, 5 und 6** ersichtlich, aus zwei den Gehäusekopf **6** beidseitig umfassenden Seitenwänden **18** und einer diese U-förmig haltenden Querwand **19** und ist auf einer Seite mit einer Stirnplatte **20** einstückig verbunden. Auf der anderen Seite der Seitenwände **18** sind nach innen weisende Rastkanten **21** mit schräg nach außen verlaufenden Einführflächen **22** angeformt, welche beim Aufdrücken der Seitenwände **18** auf den Gehäusekopf **6** in Richtung der Pfeile "**M"** sich federnd aufweiten und bei Anlage der Stirnplatte **20** an der Stirnseite des Gehäusekopfes **6** an den Kopfkanten **23** hinter den Druckplatten **15** einrasten, so daß das Verriegelungselement **17** auf dem Gehäusekopf **6** querverschieblich geführt ist.

Die Stirnplatte **20** weist hierbei von ihrer freien Abschlußkante **24** ausgehend mittig zwischen den Seitenwänden **18** eine halbrunde Aussparung **25** auf, deren Durchmesser etwas größer ist als der Außendurchmesser der Halterippe **4.** Außerdem ist vom Grund der Aussparung **25** eine weitere halbrunde Aussparung **26** in der Stirnplatte **20** ausgeformt, deren Durchmesser dem Rohrdurchmesser des Einsteckteiles **3** angepaßt ist. An der Stirnplatte **20** sind am der größeren Aussparung **25** vor dem Übergang zur kleineren Aussparung **26** beidseitig in die Öffnung des Gehäusekopfes **6** hineinragende, bogenförmig ausgebildete Stützstege **27** angeformt, deren Stützflächen **28** in dem in **Fig. 10** gezeigten Belastungszustand mit der Verrastungsebene der Haltekanten **10** abschließen.

Für den vorgesehenen Einsatz des vorbeschriebenen Verriegelungselements **17** werden die Seitenwände **18** mit den Rastkanten **21** vorweg auf den Gehäusekopf **6** in axialer Richtung aufgedrückt, und zwar so, daß die Einführflächen **22** über die Druckplatten **15** hinweggleiten und dann die Rastkanten **21** an den hinteren Kopfkanten **23** einrasten, wobei gleichzeitig die Stützstege **27** in den Freiraum zwischen den Federstegen **14** des Halteelements 7 eindringen.

Das Verriegelungselement **17** wird hierbei zunächst in die in **Fig. 5 und 6** gezeigte Öffnungsstellung gebracht, wobei der Mittelpunkt der größeren halbrunden Aussparung **25** genau mit der Achse des Aufnahmeraums **2** fluchtet. In dieser Lage läßt sich das Einsteckteil **3,** wie aus **Fig. 8 und 9** ersichtlich, in das Kupplungsgehäuse **1** einführen, wobei die Halterippe **4** mit geringem Spiel an den bogenförmig ausgebildeten Stützstegen **27** vorbeigeht. Sobald die Halterippe **4** die Haltekanten **10** des Halteelements **7** passiert hat, und diese Haltekanten **10** wieder in ihre Raststellung zurückgefedert sind, läßt sich das Verriegelungselement **17** in Richtung des Pfeiles "**V** " zur Mitte hin verschieben, bis die kleinere halbrunde Aussparung **26** an der Rohrwand des Einsteckteils **3** anliegt. Die Stützstege **27** schieben sich hierbei mit ihren Stützflächen **28** hinter die Halterippe **4** und sorgen damit bei Belastung des Einsteckteils **4** in Richtung des Pfeiles "**B"** durch Anlage der Stützkörper **11** an der Innenkante **33** der Aussparung **12** für eine zusätzliche Sicherung im Kupplungsgehäuse **1**.

Um das Verriegelungselement **17** sowohl in der Öffnungsposition als auch in der Schließposition zu fixieren, sind an der Innenseite der Stirnplatte **20** beidseitig angeschrägte Positionierungsnocken **29** angeformt. Diese sind so angebracht, daß sie sich in der Öffnungsstellung (vgl. **Fig. 5** und **8**) vor der Außenkante **30** des Gehäusekopfes **6** befinden und nach dem Verschieben in die Schließstellung (vgl. **Fig. 10**) an der Außenkante **31** der Gehäuseöffnung einrasten.

Des weiteren sind an den Seitenwänden **18** Aussparungen **32** eingeformt, welche in ihrer Größe so bemessen sind, daß diese nach dem Verschieben in die Schließposition die Druckplatten **15** zumindest teilweise überdecken und in der Öffnungposition die Druckplatten **15** freigeben, so daß sich die Haltekanten **10** erst nach dem Zurückschieben des Verriegelungselements **17** über die Druckplatten **15** auseinanderdrücken lassen, um das Einsteckteil **3** freizugeben. Das Verriegelungselement **17** bietet somit neben der doppelten Verriegelungsfunktion noch eine optische Anzeige für die korrekte Verrastung, indem die Druckplatte **15** nach der Verriegelungaktion weitgehend verdeckt ist.

### Bezugszeichenliste

- 1: Kupplungsgehäuse
- 2: Aufnahmeraum
- 3: Einsteckteil
- 4: Halterippe
- 5: Mündungsende
- 6: Gehäusekopf
- 7: Halteelement
- 8: Anschlußstutzen
- 9: Auslaßöffnung
- 10: Haltekanten
- 11: Stützkörper
- 12: Aussparungen
- 13: Öffnungen
- 14: Federstege
- 15: Druckplatten
- 16: Gehäusewand
- 17: Verriegelungselement
- 18: Seitenwände
- 19: Querwand
- 20: Stirnplatte
- 21: Rastkanten
- 22: Einführfläche
- 23: Hintere Kopfkante
- 24: Abschlußkante
- 25: Halbrunde Aussparung
- 26: Halbrunde Aussparung
- 27: Stützstege
- 28: Stützflächen
- 29: Positionierungsnocken
- 30: Außenkante des Gehäusekopfes 6
- 31: Außenkante der Gehäuseöffnung
- 32: Aussparungen
- 33: Innenkante der Aussparung 12

## Patentansprüche

1. Lösbare Steckkupplung zum Verbinden von Flüssigkeitsleitungen, bestehend aus einem rohrförmigen Einsteckteil (3) mit einer umlaufenden Halterippe (4), aus einem Kupplungsgehäuse (1) mit einem zylindrischen Aufnahmeraum (2) und einem vergrößerten Gehäusekopf (6) mit einem separaten Halteelement (7), das mit radial in den Aufnahmeraum (2) gerichteten, elastisch auffederbaren Haltekanten (10) versehen ist, welche die Halterippe (4) nach dem Eindrücken des Einsteckteils (3) in den Aufnahmeraum (2) hintergreifen, sowie aus einem mit dem Gehäusekopf (6) verbindbaren Verriegelungselement (17), welches nach dem korrekten Einrasten des Einsteckteils (3) im Halteelement (7) quer zur Einsteckrichtung vor die Halterippe (4) bewegbar ist, wobei das Verriegelungselement (17) aus zwei am Gehäusekopf (6) beidseitig anliegenden Seitenwänden (18) und einer diese U-förmig verbindenden Stirnplatte (20) gebildet ist, ferner an seiner Unterseite eine Querwand (19) besitzt und auf der der Stirnplatte (20) gegenüberliegenden Seite mit nach innen weisenden, an einer Kopfkante (23) verrastbaren Kanten (21) versehen und damit zwischen zwei Endstellungen querverschieblich geführt ist, und wobei die Stirnplatte (20) in der Öffnungsstellung eine halbrunde Aussparung (25) entsprechend dem Außendurchmesser der Halterippe (4) aufweist und vom Grund der Aussparung (25) aus in Richtung auf die Querwand (19) mit einer kleinerenb, halbrunden Aussparung (26) entsprechend dem Rohrdurchmesser des Einsteckteils (3) ausgeformt ist, **dadurch gekennzeichnet, daß** an der Stirnplatte (20) am Rand der größeren Aussparung (25) vor dem Übergang zu der kleineren Aussparung (26) je ein in den Aufnahmeraum (2) hineinragender bogenförmiger Stützsteg (27) angeformt ist, deren Stützflächen (28) im Belastungszustand mit der Verrastungsebene der Haltekanten (10) abschließen.

2. Lösbare Steckkupplung nach Anspruch 1, **dadurch gekennzeichnet, daß** an der Innenseite der Stirnplatte (20) beidseitig angeschrägte Positionierungsnocken (29) angeformt sind, und zwar derart, daß diese in der Öffnungsstellung des Verriegelungselements (17) sich vor der Außenkante (30) des Gehäusekopfes (6) befinden und beim Querverschieben in die Schließstellung unter elastischem Auffedern über die Stirnseite des Gehäusekopfes (6) hinweggleiten und an der Außenkante (31) der Gehäuseöffnung wieder einrastet.

3. Lösbare Steckkupplung nach Anspruch 1 oder 2, wobei die gegenüberliegenden Haltekanten (10) des Halteelements (7) an Stützkörpern (11) angeformt sind, welche ihrerseits im eingebauten Zustand des Halteelements (7) in entsprechende Aussparungen (12) in der Gehäusewand (16) eintauchen, und wobei die Stützkörper (11) an ihren Enden über V-förmig zusammengeführte Federstege (14) mit Druckplatten (15) verbunden sind, welche durch entsprechende Öffnungen (13) in der Gehäusewand (16) nach außen ragen und zum Lösen der Kupplung von außen eindrückbar sind, **dadurch gekennzeichnet, daß** die beiden Seitenwände (18) des Verriegelunselements (17) Aussparungen (32) aufweisen, die im Öffnungszustand des Verriegelungselements (17) die Druckplatten (15) freigeben und im Schließzustand zumindest teilweise überdecken.

## Claims

1. A releasable plug coupling for connecting fluid conduits comprising a tubular insertion portion (3) having a peripherally extending holding rib (4), a coupling housing (1) with a cylindrical receiving space (2) and an enlarged housing head (6) with a separate holding element (7) provided with holding edges (10) which are directed radially into the receiving space (2) and which can be elastically sprung open and which engage behind the holding rib (4) after the insertion portion (3) has been pushed into the receiving space (2), and a locking element (17) which can be connected to the housing head (6) and which is movable after correct latching of the insertion portion (3) in the holding element (7) transversely with respect to the insertion direction into a position in front of the holding rib (4), wherein the locking element (17) is formed from two side walls (18) bearing against the housing head (6) at both sides and an end plate (20) connecting the side walls in a U-shaped configuration, and further has at its underside a transverse wall (16) and is provided on the side in opposite relationship to the end plate (20) with inwardly facing edges (21) which are latchable at a head edge (23) and is thus guided transversely displaceably between two limit positions, and wherein in the open position the end plate (20) has a semicircular opening (25) corresponding to the outside diameter of the holding rib (4) and is shaped from the bottom of the opening (25) in a direction towards the transverse wall (19) with a smaller semicircular opening (26) corresponding to the tube diameter of the insertion portion (3), **characterised in that** formed at the end plate (20) at the edge of the larger opening (25) in front of the transition to the smaller opening (26) is a respective arcuate support leg (27) which projects into the receiving space (2) and the support surfaces (28) of which terminate in the load condition with the latching plane of the holding edges (10).

2. A releasable plug coupling according to claim 1 **characterised in that** formed on the inside of the end plate (20) are positioning projections (29) which are bevelled on both sides, more specifically in such a way that in the open position of the locking element (17) they are disposed in front of the outer edge (30) of the housing head (6) and upon transverse displacement into the closed position upon elastically springing open they slide beyond the end of the housing head (6) and latch again at the outer edge (31) of the housing opening.

3. A releasable plug coupling according to claim 1 or claim 2 wherein the oppositely disposed holding edges (10) of the holding element (7) are formed on support bodies (11) which in turn in the installed condition of the holding element (7) engage into corresponding openings (12) in the housing wall (16) and wherein at their ends the support bodies (11) are connected by way of spring legs (14) which are brought together in a V-shape to pressure plates (15) which project outwardly through suitable openings (13) in the housing wall (16) and which can be pressed in from the outside to release the coupling **characterised in that** the two side walls (18) of the locking element (17) have openings (32) which in the open condition of the locking element (17) release the pressure plates (15) and in the closed condition at least partially cover same.

## Revendications

1. Raccord rapide détachable pour le raccordement de conduites de liquide, se composant d'un élément mâle embrochable (3) muni d'une nervure de retenue périphérique (4), d'un logement d'emmanchement (1) définissant un logement de réception cylindrique (2) et d'une tête élargie formant logement d'emmanchement (6) comprenant un organe de retenue séparé (7) qui est muni d'arêtes de retenue (10) capables de céder par déformation élastique, orientées de manière radiale dans le logement de réception (2), qui sont destinées à venir cramponner par derrière la nervure de retenue (4), après que l'élément mâle embrochable (3) a été poussé en position d'accouplement dans le logement de réception (2), ainsi que d'un organe de verrouillage (17) destiné à être raccordé à la tête formant logement d'emmanchement (6) qui, une fois que l'élément embrochable (3) a été correctement encastré en position dans l'organe de retenue (7) peut être déplacée transversalement par rapport au sens de l'emmanchement, devant la nervure de retenue (4), l'organe de verrouillage (17) étant en l'occurrence constitué par deux parois latérales (18) enserrant de part et d'autre la tête formant logement d'emmanchement (6) et par une plaque frontale (20) reliant celles-ci suivant une configuration en forme d'arceau, comportant en outre une paroi transversale (19) au niveau de sa partie inférieure et étant muni sur son côté diamétralement opposé à la plaque frontale (20) d'arêtes (21) orientés vers l'intérieur, destinée à venir en prise d'accrochage avec un bord (23) de la tête et qui est donc disposé avec la possibilité de coulisser transversalement entre deux positions extrêmes, et la plaque frontale (20) comportant en l'occurrence en position d'ouverture un évidement de forme semi-circulaire (25) correspondant au diamètre extérieur de la nervure de retenue (4) et présentant, partant du fond de l'évidement (25) et orienté en direction de la paroi transversale (19), réalisé solidaire par formage, un évidement de forme semi-circulaire (26) plus petit, correspondant au diamètre tubulaire de l'élément embrochable mâle (3), **caractérisé en ce que** qu'une barrette entretoise d'appui en arc de cercle (27), faisant saillie dans le logement de réception (2), est respectivement réalisée solidaire par formage de la plaque frontale (20), sur le bord du grand évidement (25), en amont de la transition avec le petit évidement (26), dont les pattes d'appui (28), à l'état de mise en sollicitation, arrivent au niveau du plan d'encastrement des arêtes de retenue (10).

2. Raccord rapide détachable selon la revendication 1, **caractérisé en ce que** des ergots de positionnement biseautés (29) sont de part et d'autre réalisés solidaires par formage de la face intérieure de la plaque frontale (20) et ceci dans des conditions telles qu'ils se trouvent, dans la position d'ouverture de l'organe de verrouillage (17) devant le bord extérieur (30) de la tête formant logement d'emmanchement (6) et que, lors du déplacement transversal de celle-ci en position de fermeture, ils glissent, par cédage élastique, au-dessus de la face avant de la tête formant logement d'emmanchement (6) pour revenir ensuite en position d'encastrement au niveau du bord extérieur (31) de l'ouverture du logement d'emmanchement.

3. Raccord rapide détachable selon l'une des revendications 1 ou 2, dans lequel les arêtes de retenue diamétralement opposées (10) de l'organe de retenue (7) sont réalisées solidaires par formage d'éléments d'appui (11) qui, lorsque l'organe de retenue (7) se trouve dans sa position d'assemblage, viennent s'insérer dans des évidements (12) ménagés en correspondance dans la paroi (16) du logement d'emmanchement, et dans lequel les éléments d'appui (11) sont en l'occurrence reliés, au niveau de leurs extrémités, par l'intermédiaire de barrettes entretoises élastiques se rapprochant l'une de l'autre suivant une configuration en V, à des plaques de compression (15) qui, par des ouvertures (13) ménagées en correspondance dans la paroi (16) du logement d'emmanchement, font saillie vers l'extérieur et sur lesquelles il suffit d'exercer une pression depuis l'extérieur pour désolidariser le raccord, **caractérisé en ce que** les deux parois latérales (18) de l'organe de verrouillage (17) comportent des évidements (32) qui, lorsque l'organe de verrouillage (17) se trouve dans sa position d'ouverture, dégagent les plaques de compression (15) et les recouvrent au moins en partie à l'état fermé.
